# EUROPÄISCHE PATENTANMELDUNG

(11) **EP 2 339 079 A2**
(43) Veröffentlichungstag der Anmeldung: **29.06.2011**
(21) Anmeldenummer: 10015903.7
(22) Anmeldetag: 21.12.2010
(51) Int. Cl.: E04B 1/80, C08J 9/00, C08L 25/06, C08J 9/232

(54) **Dämmender geschäumter Werkstoff sowie Verwendung desselben**

(30) Priorität: 22.12.2009 DE 202009017375 U
(71) Anmelder: BPB PLACO (S.A.S.), 92150 Suresnes (FR)
(72) Erfinder: Dorn, Rainer Dr., 76448 Durmersheim (DE)
(74) Vertreter: Kuhnen & Wacker

(57) **Zusammenfassung**

Beschrieben wird ein dämmender, geschäumter Werkstoff, der aus expandierbaren Styrolpolymerisatpartikeln gebildet ist. Des Weiteren wird auch die Verwendung des erfindungsgemäßen Werkstoffes zur Wärmedämmung von Gebäuden erläutert. Der dämmende, geschäumte Werkstoff ist dabei aus einer ersten Sorte pigmententhaltender Styrolpolymerisatpartikeln und einer zweiten Sorte pigmententhaltender Styrolpolymerisatpartikeln gebildet, wobei die erste Sorte einen höheren Gewichtsanteil Pigmentmaterial enthält als die zweite Sorte. Durch die unterschiedlichen Gewichtsanteile an Pigmentmaterial in der ersten und in der zweiten Sorte Styrolpolymerisatpartikel lassen sich physikalische Eigenschaften wie beispielsweise Dichte, Wärmeleitfähigkeit und IR-Absorptionverhalten vorteilhaft beeinflussen.

## Beschreibung

Die Erfindung betrifft einen dämmenden, geschäumten Werkstoff, der aus expandierbaren Styrolpolymerisatpartikeln gebildet ist. Des Weiteren betrifft die Erfindung auch die Verwendung des erfindungsgemäßen Werkstoffes zur Wärmedämmung von Gebäuden.

Werkstoffe, die aus expandierbaren Styrolpolymerisatpartikeln gebildet werden und Verfahren zum Herstellen von Blöcken, Platten und Teilen unterschiedlichster Form sind zum Beispiel aus der DE 1 809 577 bekannt. Bei der Herstellung werden dabei expandierbare Styrolpolymerisatpartikel, die auch vorexpandiert sein können, innerhalb von Dampfkammern aufgeschäumt, wobei zumindest eine weitere Expansion der Partikel auftritt. Gleichzeitig tritt eine Verschweißung und Verklebung der entsprechend aufgeschäumten Partikeln miteinander auf. Nach einem Abkühlprozess, kann ein so hergestellter Werkstoff aus der Dampfkammer entnommen werden. Häufig erfolgt die Herstellung in Formen, so dass die Formgebung des Dämmstoffes schon während der Herstellung erreicht wird. Der Dämmstoff kann aber auch beispielsweise in großen Blöcken hergestellt werden, die dann anschließend beispielsweise in rechteckige, dreieckige oder sechseckige Platten geschnitten werden.

Der resultierende Körper kann durch seine verschiedenen physikalischen Parameter wie insbesondere Dichte und Wärmeleitfähigkeit charakterisiert werden. Im Allgemeinen entspricht dabei eine hohe physikalische Dichte einer hohen mechanischen Festigkeit, aber auch einer hohen Wärmeleitfähigkeit, also einer schlechteren Wärmedämmung.

Aus wirtschaftlichen Gründen und um eine gute Wärmedämmung zu erreichen ist es daher angestrebt Werkstoffe, insbesondere Platten mit einer geringen Dichte aber dennoch ausreichender Festigkeit (wie sie beispielsweise für die Verarbeitung von Dämmstoffplatten an Gebäudefassaden erforderlich ist) herzustellen.

Bisher wurden solche Blöcke und Platten im Wesentlichen aus expandierbaren Styrolpolymerisatpartikeln in weißer Farbe hergestellt.

Ein geringer Anteil solcher Werkstoffe wurde aber auch in anderen Farben zur Verfügung gestellt. Zur Herstellung solch farbiger Dämmstoffe können bereits pigmentierte expandierbare Styrolpolymerisatpartikel aufgeschäumt werden, wodurch eine homogene Einfärbung des Dämmstoffes erreichbar ist.

Zur Verbesserung der Wärmeleitfähigkeit, d.h. zu ihrer Verringerung schlägt die EP 0 981 574 B 1 eine Pigmentierung der expandierbaren Styrolpolymerisate mit Graphitpartikeln vor, um den Strahlungsanteil des Wärmetransports durch einen Dämmstoff aus expandierbaren Styrolpolymerisaten zu reduzieren. Dabei wird die Absorption von IR-Strahlung durch das Graphit ausgenutzt. Der Graphitanteil liegt hierbei zwischen 0,5 und 6 Gew.%. Die aus diesen Partikeln aufgeschäumten homogen dunklen (schwarzen) Schaumstoffe weisen bei einer Dichte von etwa 10g/l eine Wärmeleitfähigkeit auf, die unter 35 mW/mK liegt. Längerfristige Wärmeeinstrahlung kann jedoch bei diesen homogen dunklen Platten irreversible thermische Formveränderungen hervorrufen, die insbesondere bei der Verwendung an Gebäudefassaden an Stoßstellen der Platten Risse im Putz auf der Außenseite der Dämmplatten verursachen.

Die DE 20 2007 007 565 U1 schlägt daher vor, eine zweite Sorte ebenfalls pigmentierter Styrolpolymerisatpartikel den mit Graphitpartikeln pigmentierten ersten Styrolpolymerisatpartikeln hinzuzufügen, um dadurch thermische Instabilitäten auszugleichen.

Ausgehend hiervon, ist es deshalb eine Aufgabe der vorliegenden Erfindung, einen verbesserten, dämmenden, geschäumten Werkstoff zur Verfügung zu stellen.

Erfindungsgemäß wird die Aufgabe mit einem dämmenden geschäumten Werkstoff, der die Merkmale des Schutzanspruchs 1 aufweist, gelöst. Vorteilhafte Ausgestaltungen und Weiterbildungen der Erfindung können durch die Ausführungsformen gemäß der untergeordneten Ansprüche erzielt werden.

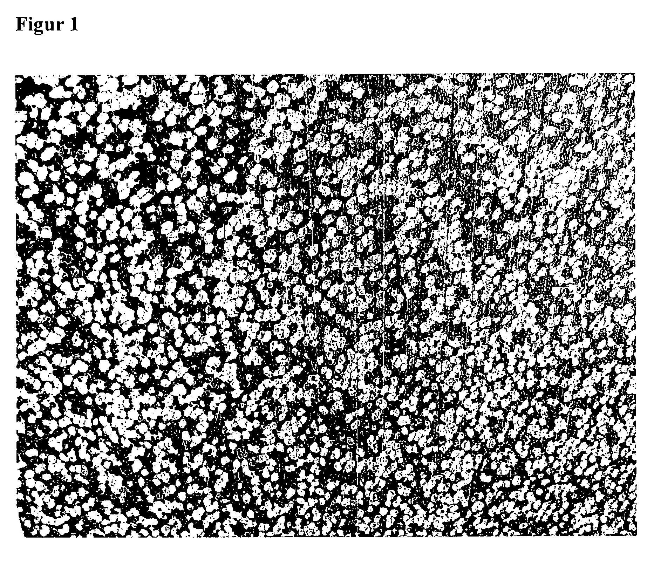

Der erfindungsgemäße dämmende, geschäumte Werkstoff ist dabei aus einer ersten Sorte pigmententhaltender Styrolpolymerisatpartikeln und einer zweiten Sorte pigmententhaltender Styrolpolymerisatpartikeln gebildet, wobei die erste Sorte einen höheren Gewichtsanteil Pigmentmaterial enthält als die zweite Sorte. Durch die unterschiedlichen Gewichtsanteile an Pigmentmaterial in der ersten und in der zweiten Sorte Styrolpolymerisatpartikel lassen sich die physikalischen Eigenschaften wie beispielsweise Dichte, Wärmeleitfähigkeit und IR-Absorptionverhalten vorteilhaft beeinflussen. Da sowohl die erste Sorte wie die zweite Sorte Styrolpolymerisatpartikel Pigmentmaterial enthalten, enthält der fertige Dämmstoffblock entsprechend der mehr oder weniger pigmentierten Styrolpolymerisatpartikel unterschiedlich dunkle Bereiche. Auf die Art und Weise lässt sich auf der einen Seite durch die dunklen Partikel (Partikel mit höherem Gewichtsanteil an Pigmentmaterial) das IR-Absorptionsverhalten und damit die Wärmeisolation des Dämmstoffes verbessern, auf der anderen Seite verhindern die weniger dunklen Bereiche (gebildet aus den Styrolpolymerisatpartikeln mit dem geringeren Gewichtsanteil Pigmentmaterial) die oben angesprochene starke thermische Ausdehnung im Vergleich zu beispielsweise einer rein schwarzen Dämmstoffplatte, wodurch thermische Formveränderungen aufgrund von Wärmeeinstrahlung kompensiert werden. Wie der Fotografie einer beispielhaften erfindungsgemäßen Ausführungsform gemäß Figur 1 zu entnehmen ist, sind die ersten und zweiten pigmententhaltenden Styrolpolymerisatpartikel innerhalb des Werkstoffes im Wesentlichen homogen verteilt und weisen eine entsprechend des Gewichtsanteils des Pigmentmaterials mehr oder weniger graue/schwarze Färbung auf. Da alle Sorten genutzter Styrolpolymerisatpartikel eine Pigmentierung aufweisen, enthält der fertige Werkstoff keine rein weißen Bereiche ohne Pigmentmaterial. Aufgrund des Herstellungsverfahrens, bei dem eine Mischung aus ersten und zweiten pigmententhaltenen Styrolpolymerisatpartikeln innerhalb von Dampfkammern aufgeschäumt wird, ist eine Agglomeration gleicher Styrolpolymerisatpartikel nicht auszuschließen, und eine mathematisch exakte, abwechselnde Anordnung erster und zweiter Styrolpolymerisatpartikel nicht möglich. Über die gesamte Fläche einer typischen Dämmstoffplatte mit den Maßen von beispielsweise 500 mm x 1000 mm sind die ersten und zweiten Styrolpolymerisatpartikel jedoch im Wesentlichem homogen verteilt. Eine Ausführungsform einer homogenen Verteilung im Sinne der vorliegenden Erfindung ist der marmoriert erscheinenden Dämmstoffplatte in Figur 1 zu entnehmen. Überraschenderweise erreicht die Wärmeleitfähigkeit des zweifarbigen dämmenden geschäumten Werkstoffes mit 32 mW/mK (Bemessungswert nach DIN 4108 Teil 4) gemäß der vorliegenden Erfindung den gleichen Wert wie eine durchgehend dunkel (schwarz) gefärbte Dämmstoffplatte.

Gemäß einer vorteilhaften Ausführungsform der Erfindung werden als Pigmentmaterial insbesondere Ruß, Graphit, Metall, Metalloxyd oder Farbpigmente genutzt.

In einer weiteren vorteilhaften Ausführungsform der Erfindung enthält die erste Sorte pigmententhaltene Styrolpolymerisatpartikel 3 bis 5 Gew.% des Styrolpolymerisatpartikels an Pigmentmaterial und die zweite Sorte 0,2 bis 2 Gew.% an Pigmentmaterial.

Durch die Wahl dieser Mengen Pigmentmaterial in den ersten und zweiten Styrolpolymerisatpartikeln ist gewährleistet, dass die Partikel auf der einen Seite dunkel genug sind um das IR-Absorptionsverhalten positiv zu beeinflussen, auf der anderen Seite ist aber der Farbunterschied zwischen den ersten und zweiten Styrolpolymerisatpartikeln aufgrund der unterschiedlichen Pigmentmaterialmengen noch so groß, dass er ausreicht um die thermische Ausdehnung bei langfristiger Wärmeeinstrahlung zu kompensieren.

Gemäß einer weiteren vorteilhaften Ausführungsform enthält die zweite Sorte Styrolpolymerisatpartikel 0,5 bis 1,0 Gew.% an Pigmentmaterial.

Hierbei kann das Pigmentmaterial der ersten Sorte (die Sorte, die den höheren Gewichtsanteil an Pigmentmaterial enthält im Vergleich zur zweiten Sorte) Ruß enthalten. Das Pigmentmaterial der zweiten Sorte pigmententhaltende Styrolpolymerisatpartikel kann vorteilhafterweise Graphit enthalten. Alternativ können die ersten und zweiten Sorten pigmentenhaltende Styrolpolymerisatpartikel auch eine Vielzahl an Pigmenten enthalten.

Sollen innerhalb des Dämmstoffmaterials bewusst Inhomogenitäten in Bezug auf Wärmeleitfähigkeit, Dichte oder Farbe verwirklicht werden, so können die Styrolpolymerisatpartikel erster und zweiter Sorte auch derart inhomogen, zum Beispiel innerhalb einer Form, angeordnet werden so dass der Werkstoff die vorgegebenen technischen Anforderungen erfiillt und daher einer, den Inhomogenitäten entsprechenden graphischen Ausgestaltung entspricht.

Zur Verbesserung der Isolationseigenschaften, bzw. zur Verminderung der Wärmeleitfähigkeit, enthält der dämmende geschäumte Werkstoff gemäß einer weiteren vorteilhaften Ausführungsform mindestens 30 Gewichtsprozent der ersten Sorte Pigment enthaltender Styrolpolymerisatpartikel (dunkle Partikel mit höherem Gewichtsanteil an Pigmentmaterial). Durch den Anteil an dunklen Partikeln größer 30% kann eine deutliche Verbesserung der Isolationseigenschaften des Werkstoffes gewährleistet werden. Besonders gute Ergebnisse werden erzielt, wenn die Partikel mit höherem und niedrigerem Pigmentanteil jeweils ca. 50 Gewichtsprozent des dämmenden geschäumten Werkstoffes entsprechen. Gemäß einer beispielhaften Ausführung der Erfindung enthält der dämmend geschäumte Werkstoff eine erste Sorte Styrolpolymerisatpartikel mit 4% Ruß als Pigmentmaterial und eine zweite Sorte Styrolpolymerisatpartikel mit 0,5% Graphit als Pigmentmaterial. Ein solcher Werkstoff weist eine Dichte von ca. 17,5g/l und eine gemessenene Wärmeleitfähigkeit von 30,5 mW/mK auf, was zu einem Bemessungswert von 32mW/mK nach DIN 4108 Teil 4 führt.

In einer weiteren vorteilhaften Ausführungsform ist der dämmend geschäumte Werkstoff von den ersten und zweiten Pigment enthaltenen Styrolpolymerisatpartikel derart inhomogen gebildet, dass die ersten und/oder die zweiten Pigment enthaltenden Styrolpolymerisatpartikel mindestens eine Schicht in dem Dämmstoff bilden. Eine solche Schicht kann beispielsweise in der Mitte einer Dämmstoffplatte aus dem erfindungsgemäß hergestellten Werkstoff angeordnet sein. Solche Schichten können aber auch Deckschichten oder Schichtpakete innerhalb des Dämmstoffes bilden.

Gemäß einer weiteren vorteilhaften Ausführungsform ist der dämmend geschäumte Werkstoff von den ersten und zweiten Pigment enthaltenen Styrolpolymerisatpartikel derart inhomogen gebildet, dass die ersten und zweiten pigmententhaltenden Styrolpolymerisatpartikel ein Muster zweier Grautöne ergeben. Hierbei können beispielsweise die ersten Styrolpolymerisatpartikel einen, bezüglich der Oberfläche eines Quader betrachteten, Rahmen bilden und die zweiten Styrolpolymerisatpartikel die Füllung des Rahmens. Selbstverständlich sind auch andere Muster wie beispielsweise eine Streifenoder Netzstruktur möglich. In den angegebenen Beispielen, können die ersten und zweiten Styrolpolymerisatpartikel gegeneinander vertauscht werden. In allen Fällen müssen die Styrolpolymerisatpartikel zweiter Sorte jedoch derart angeordnet sein um die thermischen Formveränderungen aufgrund von Wärmeeinstrahlung kompensieren zu können.

Eine solche Schicht kann beispielsweise in der Mitte einer Dämmstoffplatte aus dem erfindungsgemäß hergestellten Werkstoff angeordnet sein. Solche Schichten können aber auch Deckschichten oder Schichtpakete innerhalb des Dämmstoffes bilden.

Gemäß einer weiteren Ausführungsform ist der dämmend geschäumte Werkstoff gemäß der vorliegenden Erfindung blockförmig oder plattenförmig ausgebildet, wobei die Blöcke beispielsweise quaderförmig mit rechteckiger oder dreieckiger Grundfläche ausgebildet sein können.

Der Werkstoff gemäß der vorliegenden Erfindung wird insbesondere bei der Wärmedämmung an Gebäuden eingesetzt. Bevorzugt können die Platten an der Außenfassade verwendet werden. Selbstverständlich ist eine Verwendung für andere Dämmzwecke im Gebäude, etwa auf oder unter dem Dach oder zur Isolierung von Kellerräumen nicht ausgeschlossen.

## Patentansprüche

1. Dämmender geschäumter Werkstoff, gebildet aus einer ersten Sorte pigmententhaltender Styrolpolymerisatpartikeln und einer zweiten Sorte pigmententhaltender Styrolpolymerisatpartikeln, wobei die erste Sorte einen höheren Gewichtsanteil Pigmentmaterial enthält als die zweite Sorte.

2. Dämmender geschäumter Werkstoff gemäß Schutzanspruch 1, wobei das Pigmentmaterial ausgewählt ist aus Ruß, Graphit, Metall, Metalloxid, Farbpigmenten.

3. Dämmender geschäumter Werkstoff gemäß Schutzanspruch 1 oder 2, wobei die erste Sorte pigmententhaltender Styrolpolymerisatpartikel 3 bis 5 Gewichtsprozent Pigmentmaterial enthält und die zweite Sorte pigmententhaltender Styrolpolymerisatpartikel 0,2 bis 2 Gewichtsprozent Pigmentmaterial enthält.

4. Dämmender geschäumter Werkstoff einem der Schutzansprüche 1 bis 3, wobei die zweite Sorte pigmententhaltender Styrolpolymerisatpartikel 0,5 bis 1,0 Gewichtsprozent Pigmentmaterial enthält.

5. Dämmender geschäumter Werkstoff gemäß einem der Schutzansprüche 1 bis 4, wobei das Pigmentmaterial der ersten Sorte pigmententhaltender Styrolpolymerisatpartikel Ruß enthält.

6. Dämmender geschäumter Werkstoff gemäß einem der Schutzansprüche 1 bis 5, wobei das Pigmentmaterial der zweiten Sorte pigmententhaltender Styrolpolymerisatpartikel Graphit enthält.

7. Dämmender geschäumter Werkstoff gemäß einem der Schutzansprüche 1 bis 6, wobei die ersten und zweiten pigmententhaltenden Styrolpolymerisatpartikel homogen verteilt sind.

8. Dämmender geschäumter Werkstoff gemäß Schutzanspruch 7, wobei die homogen verteilten ersten und zweiten pigmententhaltenden Styrolpolymerisatpartikel ein marmoriertes Muster zweier Grautöne ergeben.

9. Dämmender geschäumter Werkstoff gemäß einem der Schutzansprüche 1 bis 8, wobei der Anteil der ersten Sorte pigmententhaltender Styrolpolymerisatpartikel mindestens 30 Gewichtsprozent des dämmenden geschäumten Werkstoffes beträgt.

10. Dämmender geschäumter Werkstoff gemäß einem der Schutzansprüche 1 bis 9, wobei der Anteil der ersten Sorte pigmententhaltender Styrolpolymerisatpartikel 50 Gewichtsprozent des dämmenden geschäumten Werkstoffes beträgt.

11. Dämmender geschäumter Werkstoff gemäß einem der Schutzansprüche 1 bis 6 und 9 bis 10, wobei die ersten pigmententhaltender Styrolpolymerisatpartikel mindestens eine Schicht und / oder die zweiten pigmententhaltender Styrolpolymerisatpartikel mindestens eine Schicht bilden.

12. Dämmender geschäumter Werkstoff gemäß einem der Schutzansprüche 1 bis 6 und 9 bis 11, wobei die ersten und zweiten pigmententhaltenden Styrolpolymerisatpartikel inhomogen verteilt sind und ein Muster zweier Grautöne ergeben.

13. Dämmender geschäumter Werkstoff gemäß einem der Schutzansprüche 1 bis 12, wobei der Werkstoff blockförmig oder plattenförmig ausgebildet ist.

14. Verwendung des Werkstoffes nach einem der Schutzansprüche 1 bis 13 zur Wärmedämmung von Gebäuden.
